# EUROPEAN PATENT SPECIFICATION

(11) **EP 3 024 719 B1**
(45) Date of publication and mention of the grant of the patent: **25.11.2020**
(21) Application number: 14800916.0
(22) Date of filing: 19.03.2014
(51) Int. Cl.: B63J 2/02, B63B 19/04, F24F 7/02, E04H 15/32, F16B 5/06

(54) **BOAT VENT WITH SUSPENSION AND SWIVEL SUPPORT INTERFACE**
BOOTSENTLÜFTUNG MIT AUFHÄNGUNG UND GELENKTRÄGERSCHNITTSTELLE
AÉRATION DE BATEAU AVEC SUSPENSION ET INTERFACE DE SOUTIEN À PIVOT

(30) Priority: 24.07.2013 US 201313949527
(43) Date of publication of application: 01.06.2016
(73) Proprietor: Gridley, William, Dousman, WI 53118 (US)
(72) Inventor: Gridley, William, Dousman, WI 53118 (US)
(74) Representative: Whitaker, Iain Mark
(86) International application number: PCT/US2014/031266
(87) International publication number: WO 2014/189608

(56) References cited:
- WO-A2-2009/114563
- DE-A1-102009 016 755
- DE-C- 408 806
- US-A- 4 379 468
- US-A- 4 379 468
- US-A- 5 369 856
- US-A1- 2003 230 330
- US-A1- 2009 278 016
- US-A1- 2011 192 436
- US-B2- 6 938 631

## Description

### FIELD OF THE INVENTION

Embodiments of the present invention relate in general to both design and utilitarian features in the field of ventilator apparatuses comprising at least one of a suspension interface and swivel support interface wherein such ventilator apparatus is particularly well suited for use with a vehicle cover for vehicles including boats and automobiles.

### BACKGROUND OF THE INVENTION

In a commonly owned U.S. Patent issued to Gridley (U.S. Patent Number 6,938,631) on September 6, 2005, the applicant disclosed a new apparatus for venting a cover covering a vehicle. Such ventilation apparatus was configured so that air can freely pass in and out of the space inside of the cover. Applicant disclosed an improved ventilation and support device in US20030230330A1, U.S. Patents 8,069,870, 8,220,474, and UK Patent GB 2471049 issued to Gridley on December 6, 2011, July 17, 2012, and June 3, 2013 respectively.

While the applicant's prior art ventilation apparatus works well for their intended purposes, novel improvements to the apparatus have been developed and are disclosed herein.

One improvement relates to the shape (curved plates) of the ventilation apparatus to improve fitment of the ventilator with a cover. Yet another improvement relates to providing a suspension interface to assist in storage in an unused cover as well as providing support while the ventilation apparatus is associated with a cover being used to cover a vehicle. A still further improvement relates to a ventilator support structure improvements including a swivel interface. Additional features are provided by combining the various new improvements.

### SUMMARY OF THE INVENTION

Some of the objects and advantages of the invention will now be set forth in the following description, while other objects and advantages of the invention may be obvious from the description, or may be learned through practice of the invention.

Broadly speaking, a principle object of the present invention is to provide an improved support apparatus comprising curved plates that better associate with a cover.

Another principle object of the present invention is to provide an improved ventilator support apparatus comprising curved ventilator plates that better associates with a cover and provide cover venting.

Yet another principle object of the invention is to provide an improved ventilating support apparatus configured with a suspension interface. Such suspension interface can be used when storing a cover that is not in use (i.e. "hanging it up" by suspending it from an elevated surface) or suspending the improved ventilator while associated with a cover being used to protect a vehicle such as a boat. For such configuration, a support pole is not necessary.

Another general object of the present invention is to provide an improved ventilator support system comprising a swivel interface that can be securely associated with a support surface.

For one configuration, the inventive cover ventilation/support device comprises a component assembly including a dome member defining a depending base, a first dome-shaped ventilator plate, a second dome-shaped ventilator plate and a nut. Such ventilation device is configured so that the first ventilator plate is inserted into a hole defined by a cover (i.e. cover-hole) to be supported/vented. A second ventilator plate is associated with the first ventilator plate so that part of the cover surrounding cover-hole is between a portion of the first and second ventilator plates. The depending base extends through a hole defined at the center of each ventilator plate so that the free end of the depending base sticks through the ventilator plates and is associated with a nut. The nut is tightened which causes the first and second ventilator plates to move together thereby clamping a portion of the cover between the ventilator plates. The depending base is further configured to receive a support structure component such as a pole. Such support structure component is associated with the depending base at one end and extends to a second end associated with a support surface (such as the floor of a boat).

For yet another embodiment, the improved ventilator plate comprises a component assembly including a dome member defining a suspension interface configured for receiving a suspension device such as a rope connected to an elevated surface.

For still another embodiment, the improved ventilator plate comprises a component assembly including a dome member defining a depending base wherein said depending base defines a support structure interface at one end and a suspension interface at the other end. The support structure interface may also define a swivel interface.

Additional objects and advantages of the present invention are set forth in the detailed description herein or will be apparent to those skilled in the art upon reviewing the detailed description. Also, it should be further appreciated that modifications and variations to the specifically illustrated, referenced, and discussed steps, or features hereof may be practiced in various uses and embodiments of this invention without departing from the scope thereof, by virtue of the present reference thereto. Such variations may include, but are not limited to, substitution of equivalent steps, referenced or discussed, and the functional, operational, or positional reversal of various features, steps, parts, or the like. Still further, it is to be understood that different embodiments, as well as different presently preferred embodiments, of this invention may include various combinations or configurations of presently disclosed features or elements, or their equivalents (including combinations of features or parts or configurations thereof not expressly shown in the figures or stated in the detailed description).

### BRIEF DESCRIPTION OF THE DRAWINGS

A full and enabling description of the present subject matter, including the best mode thereof, directed to one of ordinary skill in the art, is set forth in the specification, which makes reference to the appended figures, in which:
Fig. 1 is an exploded view of one exemplary prior art device;
Fig. 2 is a front elevational cross sectional view of the prior art dome depicted in Fig. 1;
Fig. 3 is a front elevational exploded view of the dome a support device;
Fig. 4 is a side elevated view of a dome portion comprising a suspension interface (9b);
Fig. 5 is a side elevated view of another embodiment of a dome portion comprising a suspension interface (9c);
Fig. 6 is a is a side perspective view one embodiment of the invention associated with a cover (11);
Fig. 7 is a side perspective view showing a plurality of devices associated with a boat cover with at least one device comprising a suspension interface being secured to an elevated support structure by a tether;
Fig. 8 is a close-up side elevational view of one embodiment of the present invention with a suspension interface as it may appear in practice attached to a cover;
Fig. 9 is a cross sectional view dome portion defining a swivel interface (28);
Fig. 10 is a side elevational exploded view of one exemplary embodiment of the invention; comprising vent holes and defining a suspension interface;
Fig. 11 is an elevated perspective view of the device depicted in Fig. 10;
Fig. 12 is a bottom plan view of the device depicted in Fig. 10;
Fig. 13 is a front elevational view of the device depicted in Fig. 10 associated with swivel components;
Fig. 14 is a side perspective view of the device depicted in Fig. 10 associated with a cover;
Fig. 15 is a bottom perspective of a dome comprising one exemplary depending base defining an attachment interface (47);
Fig. 16 is a bottom perspective view of a dome comprising one exemplary depending base defining a first attachment interface (47) and a second attachment interface (88) and further comprising a swivel-interface (49) at the free end of the depending base;
Fig. 17 is a bottom plan view of one exemplary embodiment of a dome;
Fig. 18 is a bottom plan view of one exemplary embodiment of a first clamping member;
Fig. 19 is an elevated perspective view of said fist clamping interface;
Fig. 20 is a lower perspective view of said first clamping interface;
Fig. 21 is a lower perspective view of a dome and an elevated perspective view of a first clamping member;
Fig. 22 is a side elevational view of one exemplary embodiment of a second clamping member;
Fig. 23 is an elevated perspective view of one exemplary embodiment of a second clamping member;
Fig. 24 is a bottom perspective view of one exemplary embodiment of a second clamping member;
Fig. 25 is a side elevational view of one exemplary embodiment of a fastener;
Fig. 26 is a top plan view of one exemplary embodiment of a fastener;
Fig. 27 is an elevated perspective view of one exemplary embodiment of a fastener;
Fig. 28 is a side elevational exploded view of one exemplary alternative embodiment of the invention;
Fig. 29 is lower perspective view of the dome portion depicted in Fig. 28;
Fig. 30 is side elevational view of the dome portion depicted in Fig. 28;
Fig. 31 is a bottom plan view of the dome portion depicted in Fig. 28;
Fig. 32 is a top plan view of the dome portion depicted in Fig. 28;
Fig. 33 is an elevated perspective view of one exemplary embodiment of a first clamping member;
Fig. 34 is a lower perspective view of one exemplary embodiment of a first clamping member;
Fig. 35 is a bottom plan view of one exemplary embodiment of a second clamping member;
Fig. 36 is a view of one side a second clamping member;
Fig. 37 is a view of the opposite side of the second clamping member depicted in Fig. 36;
Fig. 38 is a top plan view of the second cover interface depicted in Fig. 36;
Fig. 39 is a side elevational exploded view of one exemplary alternative embodiment the device where the dome is configured to mechanically bond to a first second clamping member;
Fig. 40 is an elevated perspective view of a dome with an integral suspension interface;
Fig. 41 is a lower perspective view of the S-V depicted in Fig. 39; and
Fig. 42 is a side perspective view of the S-V depicted in Fig. 39.

Repeat use of reference characters throughout the present specification and appended drawings is intended to represent the same or analogous features or elements of the present technology. Various objects, advantages, and features of the invention will become apparent to those skilled in the art from the following discussion taken in conjunction with the drawings.

### DESCRIPTION OF THE PREFERRED EMBODIMENTS

Reference now will be made in detail to the embodiments of the invention, one or more examples of which are set forth below. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention covers such modifications and variations as come within the scope of the appended claims. Other objects, features, and aspects of the present invention are disclosed in or may be determined from the following detailed description. Repeat use of reference characters is intended to represent same or analogous features, elements or steps. It is to be understood by one of ordinary skill in the art that the present discussion is a description of exemplary embodiments only, and is not intended as limiting the broader aspects of the present invention.

For the purposes of this document two or more items are "mechanically associated" by bringing them together or into relationship with each other in any number of ways including a direct or indirect physical connection that may be releasable (snaps, rivets, screws, bolts, etc.) and/or movable (rotating, pivoting, oscillating, etc.) Similarly, two or more items are "electrically associated" by bringing them together or into relationship with each other in any number of ways including: (a) a direct, indirect or inductive communication connection, and (b) a direct/indirect or inductive power connection.

Additionally, while the drawings may illustrate various electronic components of a system connected by a single line, it will be appreciated that such lines may represent one or more signal paths, power connections, electrical connections and/or cables as required by the embodiment of interest.

Further, while the examples used in this document relate generally to supporting and/or venting covers, the disclosed support device could be used to support and/or vent any number of structures including tents, buildings, vehicles, and roofs.

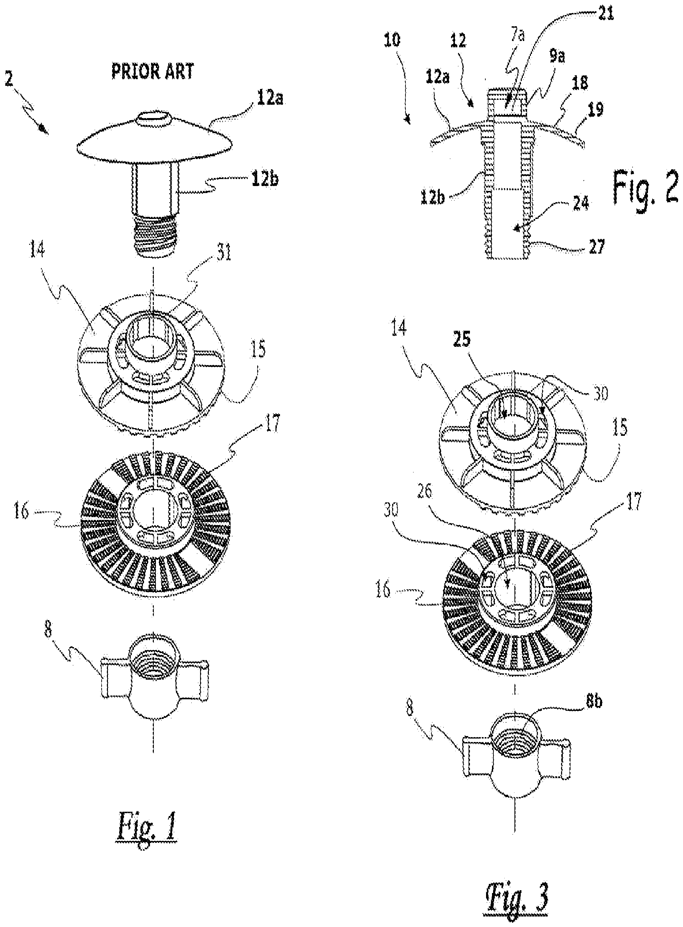

Referring now to Fig. 1, an exploded view of one exemplary prior art device is presented. The device (2) comprises a dome (12), a first ventilator plate (14), a second ventilator plate (16), and a nut (8). Suspension Interface

As depicted in Fig. 2 through Fig. 9, various embodiments of the current invention comprise a support device (10), where at least one of the dome (12) and the ventilator plates are modified. As will be described in detail below, the dome may comprise a suspension and/or a swivel interface. The clamping components my comprise vents or no vents as well as other features.

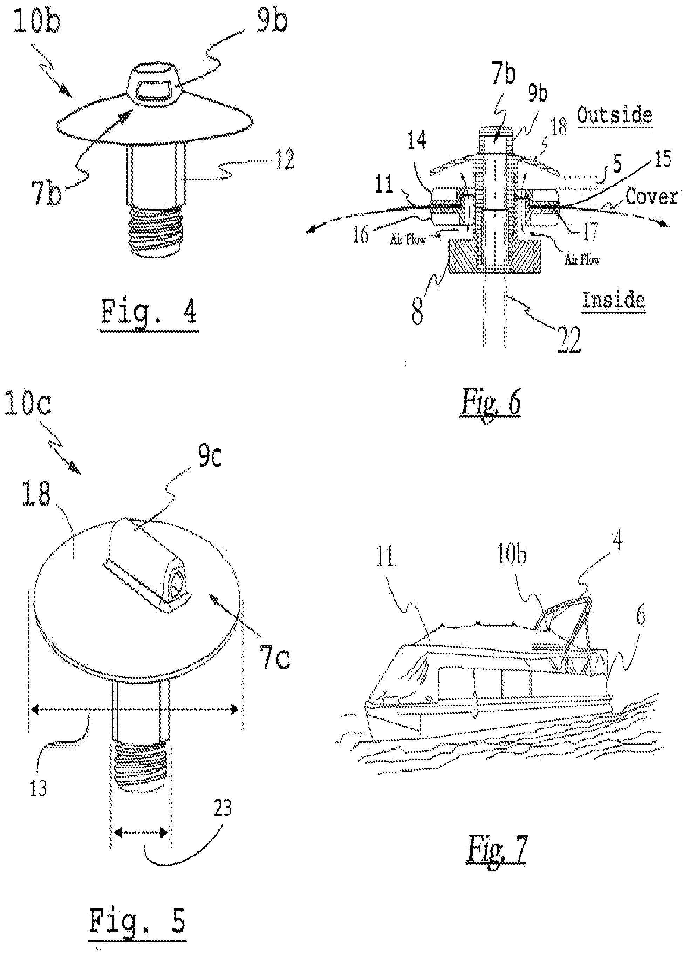

As depicted in Fig. 6, support device (10) can be generally envisioned to include an outer portion and an inner portion. The outer portion is generally that portion of support device (10) that is located on the top or exterior side ("outside") of an item to be supported/vented such as cover (11) and includes the top portion of the dome (12) and a first clamping-component (14). The inner portion is generally that portion of support device (10) that is located on the underside or interior side ("inside") of the cover (11) and includes part of the shaft portion of dome (12), second clamping-component (16), and shaft-nut (8). Thus, dome (12) is common to the outer and inner portions of support device (10).

As describe above and as best seen in Fig. 2 through Fig. 4, one exemplary embodiment of a support device (10) for supporting a cover comprises a dome (12) comprising a dome portion (12a) and a depending shaft portion (12b) wherein the axial center (21) of said dome portion (12a) is the upper most portion an wherein the outer surface (19) curves in a downward direction extending away from said axial center (12) a predefined distance thereby defining a dome-outer-perimeter (13) that is one of (a) a generally circular perimeter, and (b) a polygonal perimeter, and wherein the said depending shaft portion (12b) defines a shaft-diameter (23) and extends downwardly from said axial center (21) and further defines a shaft-to-fastener-interface (27). The shaft-to-fastener-interface may be any suitable technology including threads. A first-clamping-component (14)comprises a disc-portion defining a first-disc-hole (25) there through having a first-disc-hole-diameter greater than said shaft-diameter, and further defining a first clamping-zone (15) extending radially and outwardly from said first-disc-hole (25) and wherein said first clamping-zone (15) defines a first-item-interface. A second-clamping-component (16) comprises a second-disc-portion defining a second-disc-hole (26) there through having a second-disc-hole-diameter greater than said shaft-diameter, and further defining a second clamping-zone (17) extending radially and outwardly therefrom wherein said second clamping-zone (17) defines a second-item-interface. The clamping-components may further define vent-holes (30) defined by the disc-portions.

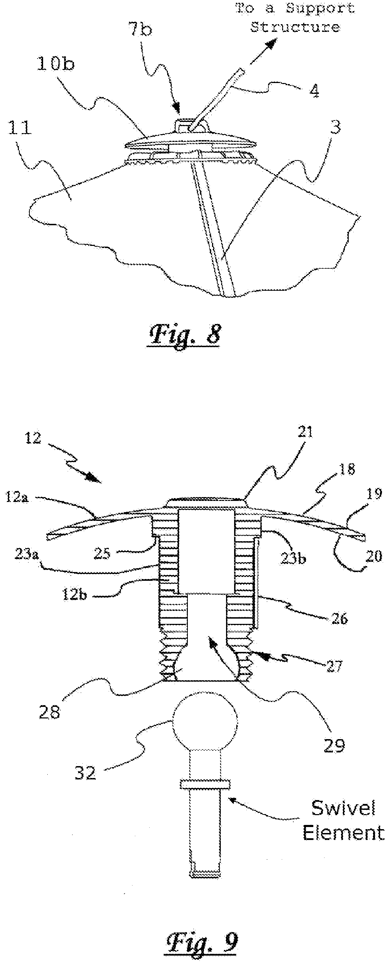

Dome (12) further comprises a fastener (8) defining a fastener-to-shaft interface (8b) configured for adjustably associating with shaft-to-fastener-interface (27). The dome (12) may further defines a suspension interface (9a, 9b, 9c) defined at said axial center of said dome portion. Dome (12) may further define a dome-to-swivel interface (28) defined at the free end of the depending shaft portion as well as a pole interface (29) defined at the free end of said depending shaft portion. One example of a sited sighted ball socket configured for receiving a swivel ball (32) thereby defining a swivel interface is depicted in Fig. 9. One example of a pole interface is a hollow shaft depicted in Fig. 9. It should be appreciated that the depending shaft portion (12b) may be hollow and that the dome portion (12a) may also define a hole there through at said axial center (21) thereby defining a suspension interface (basically a hole one can run a rope through and tie a knot in the end) .

Dome (12) generally comprises a dome portion (12a) and a shaft portion (12b) that extends downwardly from the axial center (21) of dome (12). Dome portion (12a) comprises a circular plate (18) having a curved umbrella like configuration such that the axial center point is the uppermost portion and the outer surface curves in a downward direction as it extends away from the axial center. The upper surface (19) of circular plate (18) has a convex configuration while the opposing under surface has a concave configuration. The outer perimeter of circular plate (18) preferably extends beyond the outer perimeter of the clamping components to provide an umbrella function

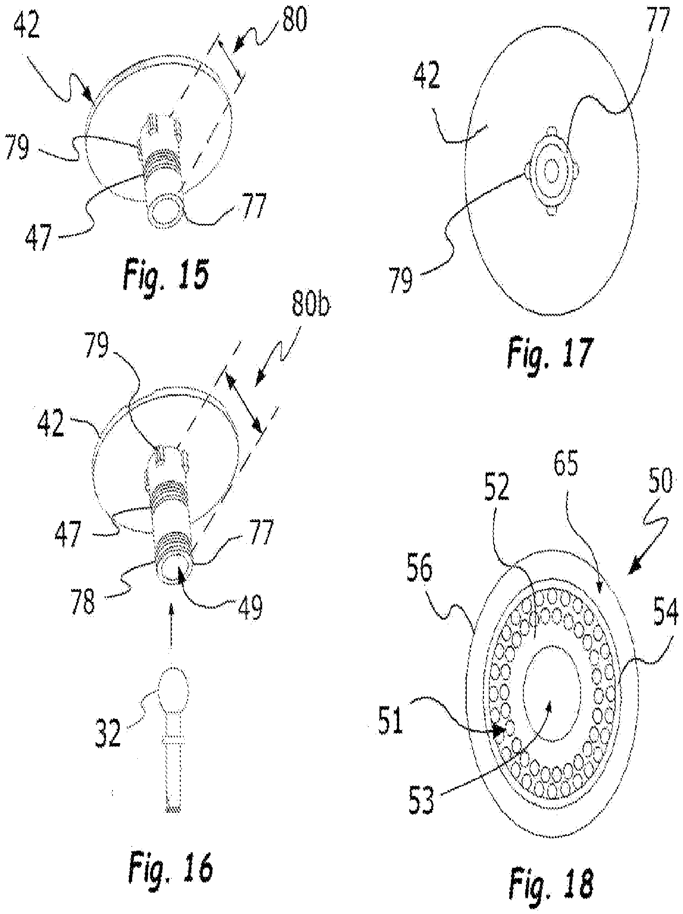

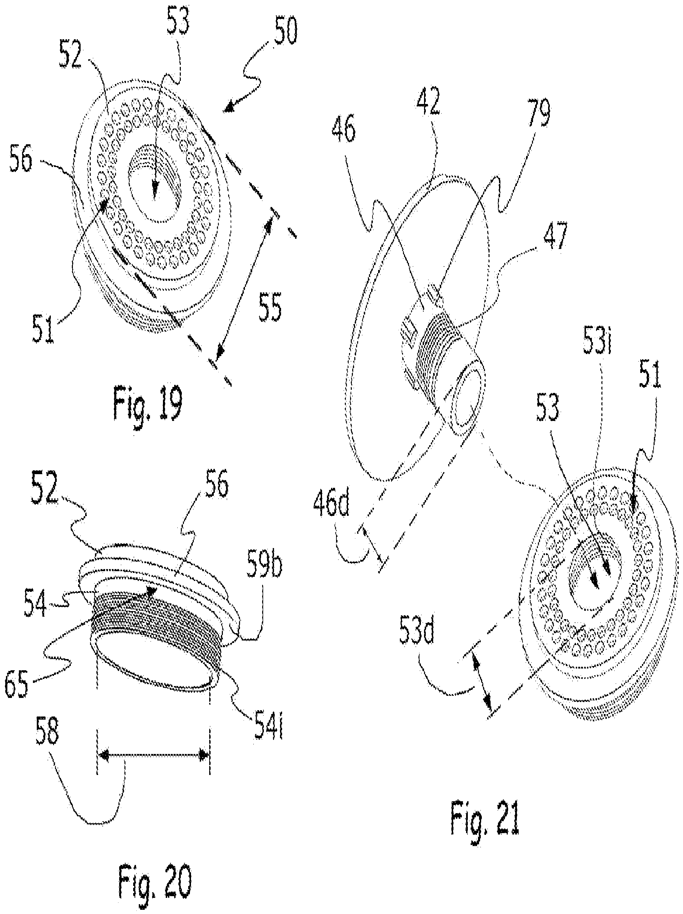

For one embodiment, shaft portion (12b) includes a blind (or sited) axial opening suitably sized to receive a support structure such as support structure (124) (e.g. see Fig. 15 and Fig. 20). Blind axial opening (24) can be of a single diameter, tapered, or of stepped, multiple diameters to accept poles of different diameters. The opening is "blind" as it is closed at one end (i.e. the hole does not go all the way through). For one alternative embodiment such hole is not blind and extends to the suspension interface and for some configurations defined the suspension interface.

As depicted in Fig. 7 and Fig. 8, the suspension interface (9b, 9c) may be used to provide a support function from an elevated surface using a tether (4). For such configuration, a tether (4) or fastener is associated with suspension interface void (7, 7b, 7c) and then secured to an elevated support structure. Such a suspension interface can also be used to stow a cover in an elevated position.

Referring now to Fig. 6, in the assembled view shown in Fig. 6, the cover material (11) is seen to include a hole there through with a main portion of the cover material (11) extending radially away from such hole and clamped between the opposed surfaces (15) and (17), of the first clamping-component (14) and the second clamping-component (16), respectively. In addition, embodiments where circular plate (18) is replaced by other configurations (such as polygonal configurations) fall within the scope of the present invention.

### Swivel Interface

In Fig. 9, yet another alternative embodiment of the invention is presented. For this current embodiment, shaft portion (12b) further defines dome-to-swivel-interface (23) configured for receiving a swivel-to-dome-interface (32) defined by one embodiment of a swivel element. It is noted, however, that dome-to-swivel-interface (28) may optionally define void (29) through which a support rod may be inserted in place of swivel element.

### Swivel and/or Suspension Ventilator Apparatus

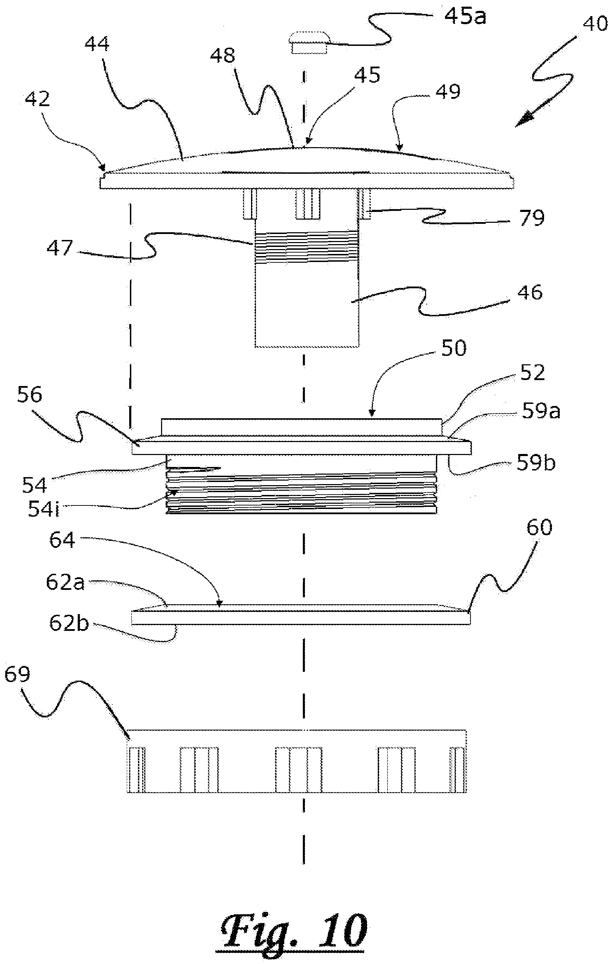

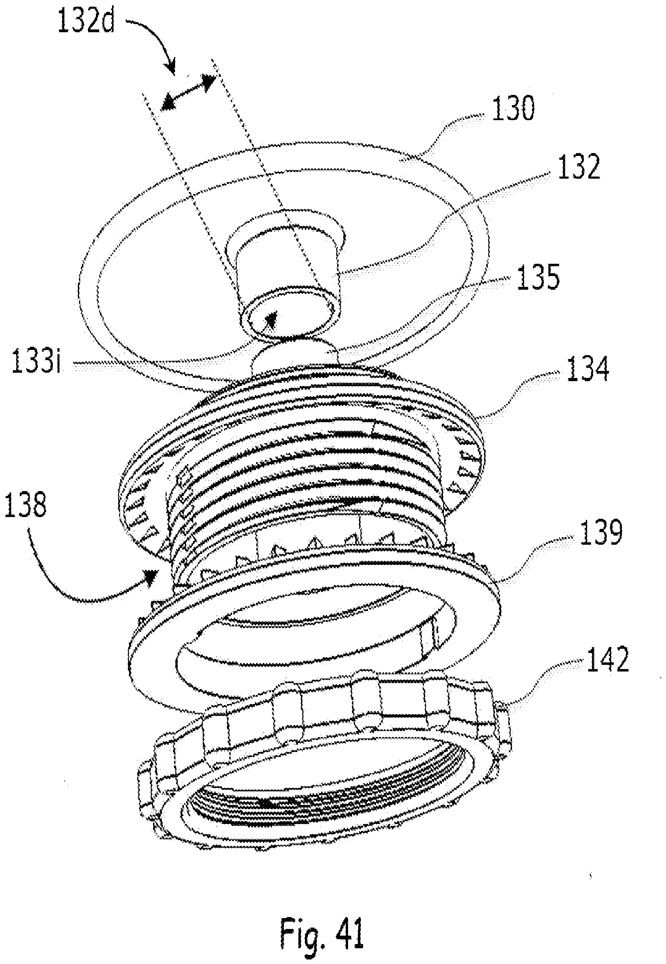

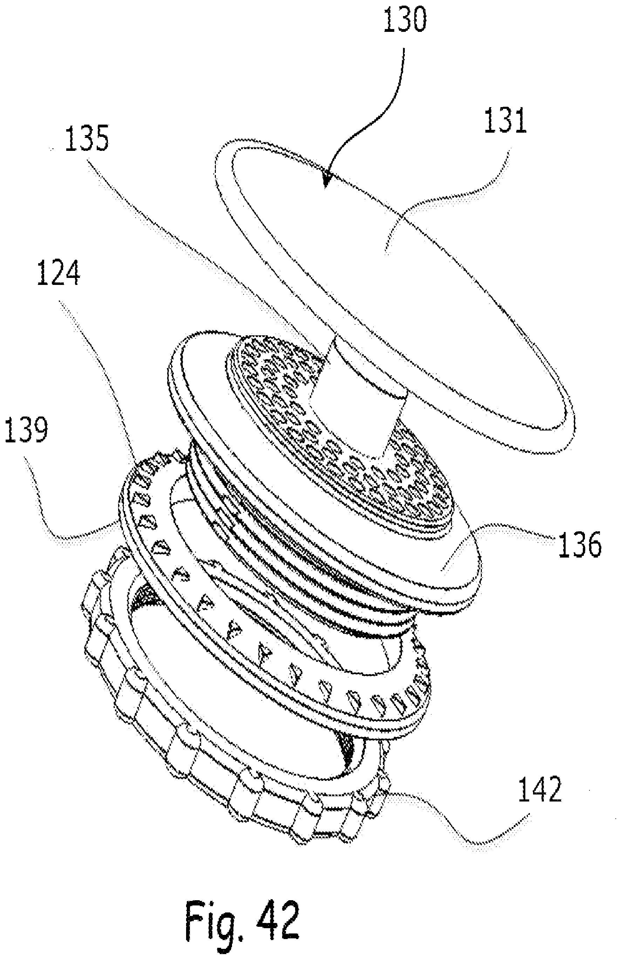

Referring now to Fig. 10 through Fig. 49, exemplary embodiments of a swivel and/or suspension ventilator/support device are presented. In hopes of improving clarity of terms, in this section, one example of a "support device" is a ventilator/support device that defines a support-interface that is associated with a support-element (such as a pole) wherein the support device is supported from a surface at a point lower than the support device (such as the flow of a boat). A "swivel support device" is a device that provides a swivel-interface at the point of contact between the support device and the support element. A suspension support device is a device that defines a suspension-interface so that the support device can be supported from an elevated surface. Such "support device" configurations may or may not comprise a ventilator feature and are generally referred to as a "support device" that may comprise any combination of the above features (swivel interface, suspension interface, both swivel and suspension interface, and with or without ventilator features).

Referring now to Fig. 10 through Fig. 18, and as will be explained in detail below, one embodiment of a device (40) for supporting an item (such as cover 11) comprises a dome (42) comprising a dome portion (44) and a depending shaft portion (46) wherein the axial center (48) of said dome portion is the upper most portion an wherein the outer surface (49) curves in a downward direction extending away from said axial center (48) a predefined distance thereby defining a dome-outer-diameter (43) that is one of (a) a generally circular perimeter, and (b) a polygonal perimeter, and wherein the said shaft portion (46) extends downwardly from said axial center (48) and further defines a shaft-to-disc-interface (47).

For one alternative embodiment, the dome portion (44) defines one or more dome-groves that preferably intersect (for two or more groves) at axial center (48). The shaft portion (46) may further defined shaft-standoffs (79) configured to maintain a predefined dome-to-disc gap (41).

As best seen in Fig. 10 and Fig. 19, device (40) further comprises a first-clamping-member (50) comprising a disc-portion (52), a lower-band-portion (54), and a first clamping-ring (56) extending radially and outwardly therefrom. The disc-portion (52) defines a disc-hole (53) in the approximate center thereof and wherein the outer diameter (55, Fig. 19) of said disc-portion (52) is shorter than said dome-outer-diameter (43). The diameter (53d) of said disc-hole (53) is larger than the diameter (46d) of said depending shaft portion (46) so that depending shaft portion may be inserted into disc-hole (53, Fig. 21). Further, at least part of the surface of the disc-portion (52) defining the outer boundary of said disc-hole (53) further defines a disc-to-shaft-interface (53i, Fig. 21) suitably configured to be mechanically associated with shaft-to-disc-interface (47).

The lower-band-portion (54) extends downwardly from said disc-portion (52). The inner diameter (58, Fig. 20) of said lower-band-portion (54) is greater than the diameter (53d) of said disc-hole (53) and the outer diameter of said lower-band-portion (54) is less than the outer diameter of the first clamping-ring (56) and the second clamping ring (60) and wherein a surface of said lower-band-portion defines a lower-band-to-fastener-interface (54i).

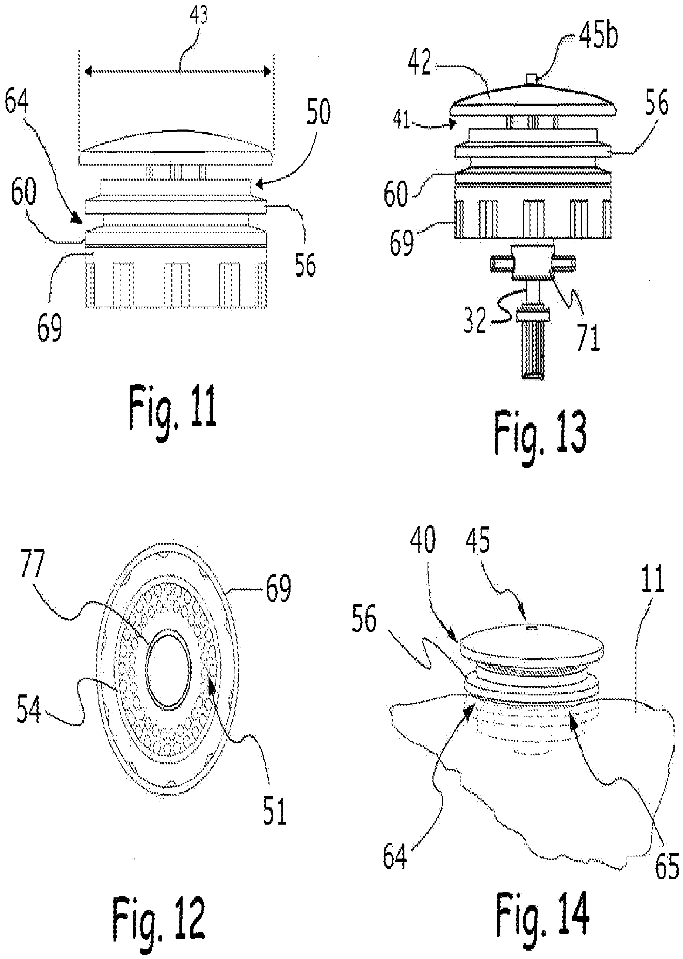

As best seen in Fig. 10, Fig. 19 and Fig. 20, the first clamping-ring (56) comprises an upper surface (59a) and lower surface (59b) connected by a peripheral edge wherein a clamping-zone (65) is defined along said lower surface (59b) between the outer diameter of said first clamping-ring (56) and the outer diameter of said lower-band-portion (54) wherein said clamping-zone (65) is configured for being associated with an item (such as cover 11, Fig. 14) to be supported.

The device (40) further comprises a second-clamping-member (60) comprising a second clamping-ring (62) defining a ring shaped component defining a ring-void (66) thereby defining a second-ring-inner-diameter (67) and a second-ring-outer-diameter (68) and further defining an upper surface (62a) and a lower surface (62b) connected by a peripheral edge (63) wherein a second-clamping-zone (64) is defined along said upper surface (62a) between said second-ring-inner-diameter (67) and said second-ring-outer-diameter (68) and wherein the length of said second-ring-inner-diameter (67) is longer than the outer diameter of said lower-band-portion (54) so that said lower-band-portion can slide through said ring-void (66).

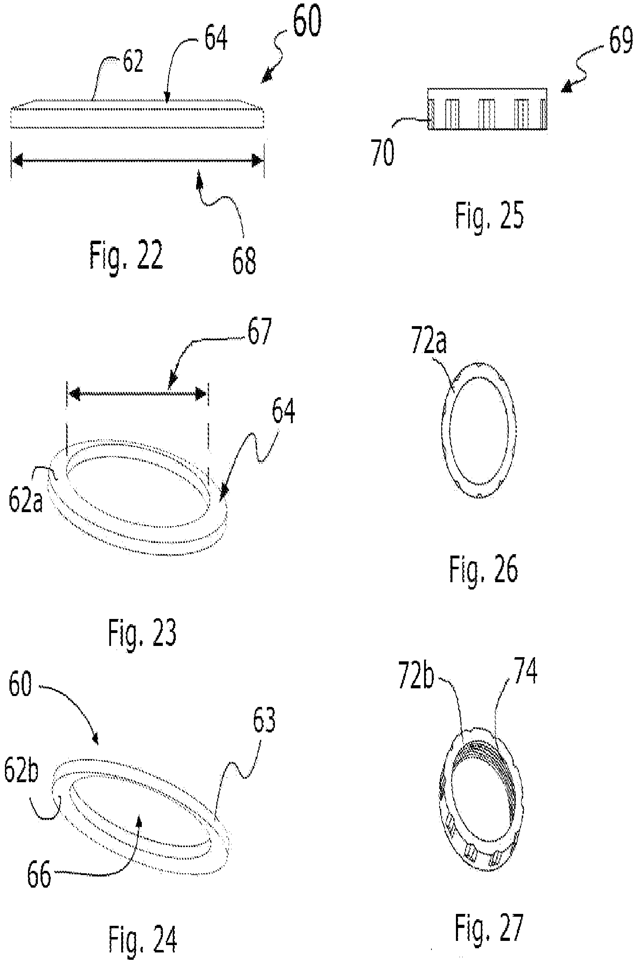

Referring to Fig. 25 through Fig. 27, device (40) further comprises a fastener (69) defining a fastener-to-lower-band-interface (74) configured for adjustably associating with said lower-band-to-fastener-interface (54i).

For the currently preferred embodiment, dome (42) further defines at least one of (a) a suspension interface (45) defined at said axial center (48), (b) a dome-to-swivel interface (49) defined at the free end (77) of said depending shaft portion (46), and (c) a pole interface (29) defined at the free end (77) of said depending shaft portion (46). For the currently preferred embodiment, the item to be supported is a cover and the depending shaft portion (46) is hollow and the dome portion (42) defines a hole there through at said axial center (48) thereby defining a suspension interface (45). When ventilation is required, disc-portion (52) defines at least one vent hole (51) there through thereby providing a venting function between the outside and inside of said cover.

For one preferred embodiment, as depicted in Fig. 10, and Fig. 17, suspension-interface (48) defines a hole which may extend beyond the surface of dome-portion (45b, Fig. 13). As depicted in Fig. 10, device (40) may include a dome accessory such as dome plug (45a). Thus, where the suspension interface (45) defines a hole, exemplary dome-accessories include: a plug (45a), cleat, rope fasteners, and lighted plug (electronically lighted plug). A lighted plug, for example, may include a plug configured for being inserted in to suspension interface (45) wherein in said plug comprises a battery (or power connection), a low power consumption light generator such as an LED that is further connected to an accelerometer to provide an independent brake light function when a vehicle is being towed. Restated, the light senses acceleration and self-activates.

For one embodiment, no suspension interface (45) is provided and the hollow shaft portion (46) defines a blind opening so that a pole may be inserted into depending shaft portion (46) to supply a supporting force to device (40) from a surface below the support device (180). Although, it should be further appreciated that for embodiments where the diameter of the hollow section of depending shaft portion (46) is greater than the diameter of the hole defining suspension interface (45), a pole may be used to supply a support force where the outer diameter of such pole is greater than the diameter of hole defining suspension interface (45).

For the currently preferred configuration, the length (80, Fig. 15) of depending shaft (46) is preferably selected so that the shaft-free-end (77) does not extend beyond fastener (69) when support device (40) is assembled as depicted in Fig. 11 and Fig. 13.

For one alternative embodiment, as depicted in Fig. 15 and Fig. 20, the free end of depending shaft portion (184) further defines a dome-to-swivel-interface (49). For such configuration, the length (80) of depending shaft (46) is selected so that dome-to-swivel-interface (49) extends at least partially beyond fastener (69) as depicted in Fig. 13). One example of a dome-to-swivel-interface (49) is a ball socket as disclosed earlier. Such ball socket is configured for receiving a swivel ball (32) thereby defining a swivel interface.

As best seen in Fig. 16, the free end (77) of depending shaft (46) may further define a shaft-to-swivel-nut-interface (78) configured for being mechanically associated with a swivel-nut (71). One embodiment of such attachment interface includes threads.

It should be appreciated that, as depicted in the various drawings, the clamping surfaces of first-clamping-member (56) and the second-clamping-member (60) may be contoured or beveled to improve fitment between the support device (40) and cover (11). In fact, for the preferred embodiment, the clamping zones defined the general shape of a beveled washer.

It should be appreciated that fastener (69) defines fastener surfaces (72a) and (72b) . As depicted in Fig. 21, when shaft portion (46) is inserted into disc-hole (53) and shaft-disc-interface is mechanically associated with disc-to-shaft-interface (53) and secured into place so that the disc-portion (52) is adjacent to shaft standoffs (79) to maintain a predefined dome-to-dis-gap (41), and the lower-band-portion (54) is inserted into the second clamping member (60) so that the upper surface (62a) defined by the second clamping ring (62) is adjacent to the lower surface (59b) defined by the first clamping ring (56), the fastener-to-lower-band-interface (74) is mechanically associated with the lower-band-to-fastener-interface (54i) defined by the lower-band-portion and adjusted (screwed on) until surface (72) presses against lower-surface (62b) until the clamping zones pinch the item to be supported (such as cover 11) between the clamping surfaces.

### Snap Interface

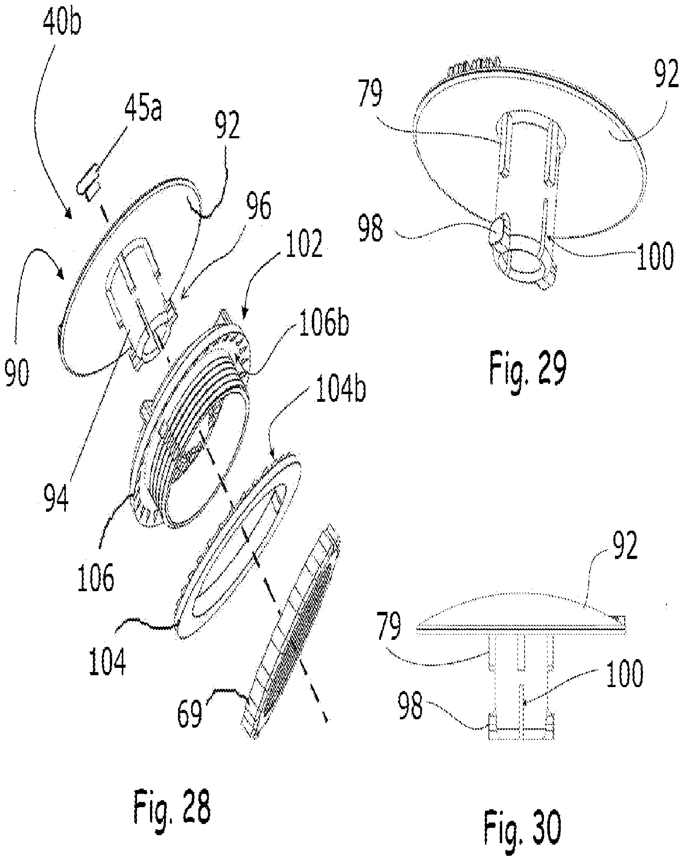

As depicted in Fig. 28 through Fig. 38, one alternative embodiment of device (40b) includes a modified disc-to-shaft-interface and shaft-disc-interface as well as modified clamping rings and lower band portion.

For the currently preferred embodiment, dome (90) comprise a dome-portion (92) and a depending shaft portion (94) that extends downwardly from said axial center (91) and further defines a dome-to-disc-interface (96) defining locking tabs (98) and slots (100). Support device (40) further comprises modified first-clamping-members (102) and second-clamping-members (104). Embodiments where dome (90) and first-clamping-member (102) are integrated into a single component fall within the scope and sprit of the invention.

First dome-to-disc-interface (96) comprises locking taps (98) configured for mechanically associating with tab-receivers (103) defined by first-clamping-member (102). Tab-receivers (103) define one alternative embodiment of a disc-to-shaft-interface. As previously noted, any suitable attachment interface may be used including threads and resilient/flexible snaps/tabs.

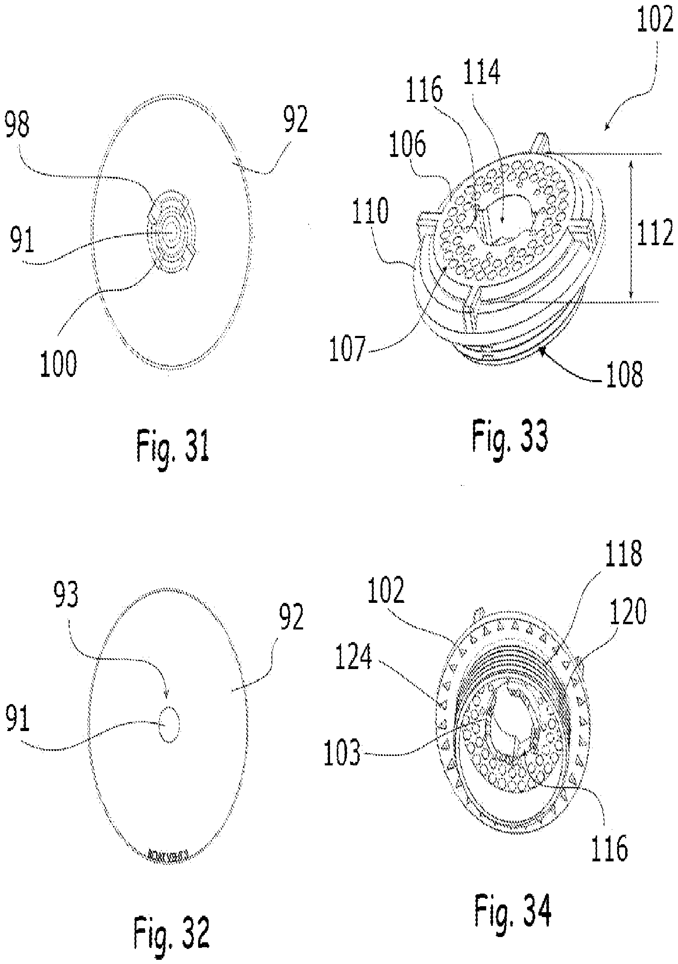

Referring now to Fig. 33 and 34, the modified first-clamping member (102) is considered in more detail. First-clamping member (102) comprises a disc-portion (106), a lower-band-portion (108), and a first clamping-ring (110) extending radially and outwardly therefrom. For all embodiments, such components may define one integral component or a plurality of mechanically associated components. As previously presented, preferably, the disc outer diameter (112) of said disc-portion (106) is shorter/smaller than said dome-outer-perimeter so that dome-portion (92) provides an umbrella function.

Disc-portion (106) further defines a disc-hole (114) in the approximate center thereof, wherein the diameter of said disc-hole is larger than the diameter of said depending shaft portion (94) so that depending shaft portion (94) can be inserted through Disc-portion (102). A portion of the walls of disc-portion (102) defining the outer circumference of disc-hole (114) define locking tap slots (116) configured for allowing locking tabs (98) to slide through such slots to locking tab receivers (103). Such a configuration allows the depending shaft portion (94) to be inserted through Disc-portion (102) so that the dome-to-disc-interface (96) can be mechanically associated with the disc-to-shaft-interface (by twisted the dome so that locking tabs (98) are received by said locking tab receivers (103)).

For embodiments where support device (40b) is further configured to provide a venting function, disc-portion (106) defines at least one vent (107) there through configured to transfer air from one side of disc-portion (192b) to the other side.

Modified first-clamping member (102) further comprises a modified lower-band-portion (108) that extends downwardly from said disc-portion (105). As before, the lower-band-portion defines a lower-band-to-fastener-interface. For one alternative embodiment lower-band-to-fastener-interface (118) defines at least one ring lock slot (120) configured to receive a ring lock (121) defined by the second-clamping-member (104) (described later). For the currently preferred embodiment, lower-band-portion (108) defines two ring lock slots (120) 180 degrees apart. Similarly, for the current embodiment, lower-band-to-fastener-interface (118) defines two ring lock slots (116) 180 degrees apart.

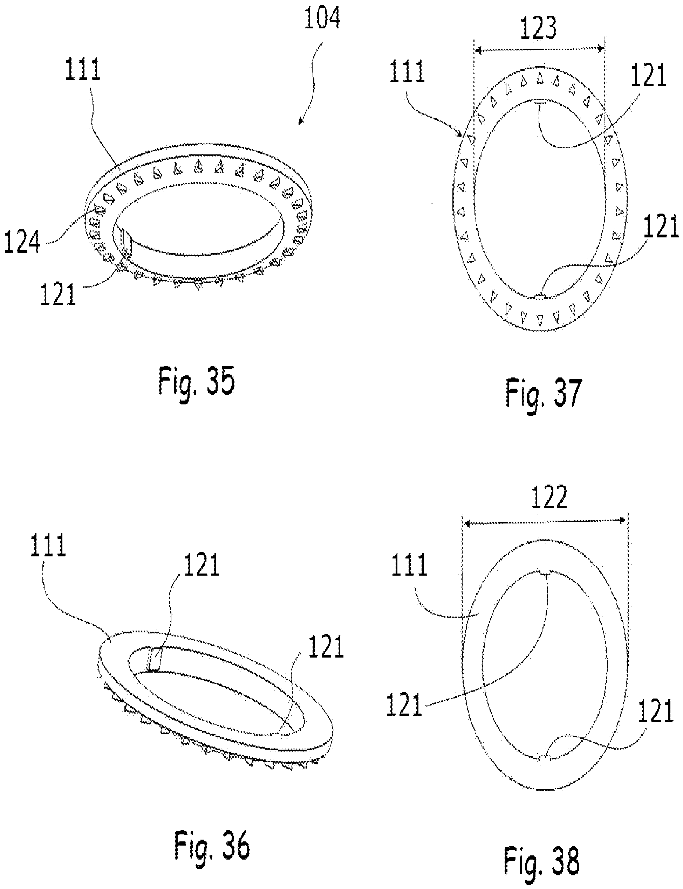

For the current embodiment, a plurality of gripping elements (124) are defined along clamping zones defined the first-clamping-member and the second-clamping-member. One exemplary embodiment of gripping elements (124) are cleats as depicted in Fig. 35.

For the currently preferred embodiment, the inner-diameter (122) of the second-clamping-member is larger than the lower-band-portion and outer-diameter (122) is substantially equal to the outer diameter of the first clamping-ring defined by disc-portion (106). One of ordinary skill in the art will appreciated that such a configurations allows lower-band-portion to be inserted into said second-clamping-member so that the second-clamping-member may be moved along lower-band-portion until the second-clamping-member is adjacent the first-clamping-member.

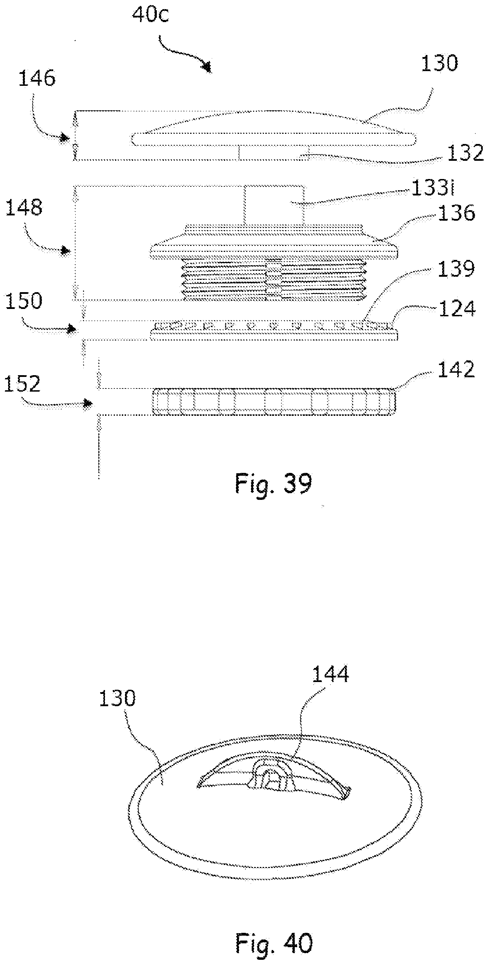

Referring now to Fig. 39 - Fig. 42, another alternative embodiment of a device (40c) is presented. For this alternative embodiment, support device (40c) comprises a modified dome portion (130), a modified first-clamping-member (134), a second clamping member and a fastener.

Device (40c) for supporting an item comprises a dome defining an axial center (131) and comprising a dome portion (130) and a shaft portion (132) and wherein the outer perimeter of said dome portion (130) defines a dome-outer-diameter that is one of (a) a generally circular perimeter, and (b) a polygonal perimeter, and wherein the said shaft portion (132) further defines a shaft-to-disc-interface (133i).

Device (40c) further comprises a first-clamping-member (136) comprising a disc-portion, a lower-band-portion, and a first clamping-ring extending radially and outwardly therefrom as described previously. The disc-portion defines a disc-to-shaft-interface (135) in the approximate center thereof. For this embodiment, the shaft-to-disc-interface (133i) is configured to bond to disc-to-shaft-interface (135) to form an integral component as described below. The first-clamping-member (136) further comprises a lower-band-portion (137) that extends downwardly from said disc-portion and wherein the outer diameter of said lower-band-portion is less than the inner diameter of said clamping-ring and wherein at least part of a surface of said lower-band-portion defines a lower-band-to-fastener-interface (138).

As before, the first clamping-ring comprises an upper surface and lower surface connected by a peripheral edge wherein a clamping-zone defined along the lower surface between the outer diameter of said first clamping-ring and the outer diameter of said lower-band-portion wherein the clamping-zone is configured for being associated with an item to be supported.

As previously described, device (40c) further comprises a second-clamping-member (139) comprising a second clamping-ring defining a ring shaped component defining a ring-void thereby defining a second-ring-inner-diameter and a second-ring-outer-diameter and further defining an upper surface and a lower surface connected by a peripheral edge wherein a second clamping zone is defined along said upper surface between said second-ring-inner-diameter and said second-ring-outer-diameter. Preferably, the length of said second-ring-inner-diameter is longer than the outer diameter of said lower-band-portion so that said lower-band-portion can slide through said ring-void.

Device (40c) further comprises a fastener (142) defining a fastener-to-lower-band-interface configured for adjustably associating with said lower-band-to-fastener-interface.

As noted above, the shaft-to-disc-interface (133i) is configured to bond to disc-to-shaft-interface (135) to form an integral component as described below. Such can be accomplished in at least two ways. First, the shaft portion is at least partially hollow defining an inner-shaft-surface wherein at least part of said inner-shaft-surface defines said shaft-to-disc-interface and wherein said shaft-to-disc-interface is suitably configured for being mechanically associated with said disc-to-shaft-interface which may be cylindrical and extending and extending away from said disc portion as depicted in Fig. 39. Any suitable bonding technology may be used including epoxy or sonic welding.

Second, at least part of the outer surface of said shaft portion defines said shaft-to-disc-interface that is suitably configured to be at least partially inserted into said and mechanically associated with said disc-to-shaft-interface. For this embodiment, the length of shaft portion (132) may be selected so that the shaft portion extends through said disc portion and to a predefined distance such as the bottom of fastener (142) (as before) where the free end of such shaft portion defines a dome-to-swivel interface.

For the preferred embodiment, the dome further defines at least one of (a) a integral suspension interface (144) defined at axial center (131), (b) a dome-to-swivel interface defined at the free end of said depending shaft portion, and (c) a pole interface defined at the free end of said depending shaft.

Exemplary measurements for device (40) include a dome diameter is about 4.6 inches, the depending shaft length (146) of about 2.0 inches, the first-clamping member height (148) of about 1.75 inches, the second-clamping-interface height (150) of about .289 inches and the a fastener height (152) of about 0.4 inches.

While the present subject matter has been described in detail with respect to specific embodiments thereof, it will be appreciated that those skilled in the art, upon attaining an understanding of the foregoing may readily adapt the present technology for alterations to, variations of, and equivalents to such embodiments. Accordingly, the scope of the present disclosure is by way of example rather than by way of limitation, and the subject disclosure does not preclude inclusion of such modifications, variations, and/or additions to the present subject matter as would be readily apparent to one of ordinary skill in the art.

## Claims

1. A device for supporting an item, said device (**40c**) comprising: a dome defining an axial center and comprising a dome portion (**130**) and wherein the outer perimeter of said dome portion (**130**) defines a dome-outer-perimeter that is one of (a) a generally circular perimeter and (b) a polygonal perimeter; a shaft portion (**132**) extending from said axial center wherein said shaft portion (**132**) is one of solid and at least partially hollow and wherein said shaft portion (**132**) is one of (a) integral to said dome portion (**130**) and (b) mechanically associated with said dome portion (**130**); a first-clamping-member (**102**; **136**) comprising a disc-portion (106) defining a disc-hole (114), a lower-band-portion (**108;137**), and a first clamping-ring (**110**) extending radially and outwardly therefrom, wherein:
(a) said disc-portion (**106**) defines a disc-to-shaft-interface (**135**) in the approximate center thereof wherein said disc-to-shaft-interface (**135**) is defined by one of (i) at least part of the surface of said disc portion (**106**) defining the outer perimeter of said disc-hole (**114**) defined by said disc-portion (**106**) at the center of said disc-portion (**106**), (ii) at least part of the outer surface of a solid disc-shaft extending away from the center of said disc-portion (**106**), (iii) a at least part of the outer surface of an at least partially hollow disc-shaft extending away from the center of said disc-portion (**106**), and (iv) a at least part of the inner surface of an at least partially hollow disc-shaft extending away from the center of said disc-portion (**106**);
(b) said lower-band-portion (**108;137**) extends downwardly from said disc-portion (**106**) and wherein said lower-band-portion (**137**) defines an outer-band-diameter and an inner-band-diameter and wherein at least part of a surface of said lower-band-portion (**137**) defines a lower-band-to-fastener-interface (**118;138**);
(c) said first clamping-ring (**110**) comprises an upper surface and lower surface connected by a peripheral edge thereby defining a first-ring-outer-diameter and a first-ring-inner-diameter and wherein a first clamping-zone is defined along at least part of said lower surface between said first-ring-outer-diameter and said first-ring-inner-diameter wherein said first clamping-region is configured for being associated with an item to be supported; and
(d) wherein the outer-band-diameter is less than the first-ring-inner-diameter and wherein the inner-band-diameter is greater than the diameter of said disc-hole; a second-clamping-member (**139**) comprising a second clamping-ring comprising a ring shaped component defining a second ring- void thereby defining a second-ring-inner-diameter and a second-ring-outer-diameter and further defining an upper surface and a lower surface connected by a peripheral edge wherein a second clamping-zone is defined along said upper surface between said second-ring-inner-diameter and said second-ring-outer-diameter and wherein the length of said second-ring-inner-diameter is longer than said outer-band-diameter so that said lower-band-portion (**137**) can slide through said second ring-void; a fastener (**142**) defining a fastener-to-lower-band-interface configured for adjustably associating with said lower-band-to-fastener-interface (**138**); wherein said dome further defines at least one of (a) a suspension interface (**144**) defined at said axial center (**131**), (b) a dome- to-swivel interface (**49**) defined at the free end of said depending shaft portion (**132**), and (c) a pole interface defined at the free end of said depending shaft; and wherein at least part of a surface of said shaft portion (**132**) defines a shaft-to-disc-interface (**133i**) suitably configured for being mechanically associated with said disc-to-shaft-interface (**135**).

2. The device for supporting an item as claimed in claim 1, wherein said shaft portion (**132**) is at least partially hollow defining an inner-shaft-diameter (**132d**) and an inner-shaft-surface wherein: (a) at least part of said inner-shaft-surface defines said shaft-to-disc-interface (**133i**) and wherein said disc-to-shaft-interface (**135**) comprises a cylindrical extension extending away from said disc portion (**106**) and wherein the outer diameter of said cylindrical extension is shorter than said inner-shaft-diameter and wherein said cylindrical extension is inserted into said shaft portion and wherein at least part of the outer surface of said cylindrical extension is configured for being mechanically associated to said shaft-to-disc-interface (**133i**); and (b) wherein said disc-to-shaft- interface (**135**) comprises a cylindrical extension extending away from said disc portion (**106**) and wherein said cylindrical extension is at least partially hollow thereby defining an inner-extension-surface and an inner-extension-diameter and an outer-extension-diameter and wherein the inner-extension-diameter is longer than the outer diameter of said shaft portion (**132**) and wherein at least part of the outer shaft surface defines said shaft-to-disc-interface (**133i**) and wherein said shaft portion (**132**) is inserted into said cylindrical extension so that the shaft-to-disc-interface (**133i**) is mechanically associated with said disc-to-shaft- interface (**135**).

3. The device for supporting an item as claimed in claim 1, wherein said shaft portion (**132**) is completely hollow defining an inner shaft diameter (**132d**) and wherein said dome portion (**130**) defines a dome-hole at said axial center wherein the diameter of said dome-hole is shorter than said inner shaft diameter and wherein said first-clamping-member(**136**) defines a disc-hole through its center thereby defining a suspension interface at the axial center of said dome.

4. The device for supporting an item as claimed in claim 1, wherein said shaft portion (**132**) extends through said first-clamping-member (**136**) and wherein the free end of said shaft portion (**132**) defines said dome-to-swivel interface (**49**) and wherein said disc-portion (**106**) defines at least one vent hole (**51**) there through thereby providing a venting function and wherein said first clamping-zone and said second clamping-zone define a plurality of gripping elements.

5. The device for supporting an item as claimed in claim 4, wherein the dome diameter is about 11.7cm (4.6 inches), the depending shaft length (**146**) is about 5cm (2.0 inches), the first-cover interface height (**148**) is about 4.4cm (1.75 inches), the second-cover-interface height (**150**) is about 0.73cm (0.289) inches and the a nut height (**152**) is about 1cm (0.4 inches).

## Patentansprüche

1. Eine Vorrichtung zum Tragen eines Gegenstands, wobei diese Vorrichtung (**40c**) Folgendes umfasst: eine Kuppel, die einen axialen Mittelpunkt definiert und einen Kuppelabschnitt (**130**) umfasst, und wobei der Außenumfang dieses Kuppelabschnitts (**130**) einen Kuppel-Außenumfang definiert, bei dem es sich um einen von (a) einem allgemeinen kreisförmigen Umfang und (b) einem polygonalen Umfang handelt; einen Wellenabschnitt (**132**), der sich von diesem axialen Mittelpunkt erstreckt, wobei der besagte Wellenabschnitt (**132**) fest und zumindest teilweise hohl ist und wobei dieser Wellenabschnitt (**132**) (a) für diesen Kuppelabschnitt (**130**) wesentlich und (b) mechanisch mit diesem Kuppelabschnitt (**130**) verbunden ist; ein erstes Klemmelement (**102; 136**), das einen Scheibenabschnitt (**106**) umfasst, der ein Scheibenloch (114), einen unteren Bandabschnitt **(108;137)** und einen ersten Klemmring (**110**), der sich von dort radial und nach außen hin erstreckt, definiert, wobei:
(a) dieser Scheibenabschnitt (**106**) eine Grenzfläche zwischen Scheibe und Welle (**135**) in der ungefähren Mitte davon definiert, wobei die Grenzfläche zwischen Scheibe und Welle (**135**) durch eines der folgenden Elemente definiert wird: (i) mindestens einen Teil der Oberfläche dieses Scheibenabschnitts (**106**), die den Außenumfang des Scheibenlochs (**114**) definiert, der durch den Scheibenabschnitt (**106**) in der Mitte dieses Scheibenabschnitts (**106**) definiert ist, (ii) mindestens einen Teil der Außenfläche einer festen Scheibenwelle, die sich von der Mitte dieses Scheibenabschnitts (**106**) erstreckt, (iii) mindestens einen Teil der Außenfläche einer zumindest teilweise hohlen Scheibenwelle, die sich von der Mitte dieses Scheibenabschnitts erstreckt (**106**) und (iv) mindestens einen Teil der Innenfläche einer zumindest teilweise hohlen Scheibenwelle, die sich von der Mitte des Scheibenabschnitts (**106**) erstreckt;
(b) sich dieser untere Bandabschnitt (**108**;**137**) von dem Scheibenabschnitt (**106**) nach unten erstreckt und wobei der untere Bandabschnitt (**137**) einen äußeren Banddurchmesser und einen inneren Banddurchmesser definiert und wobei mindestens ein Teil einer Oberfläche dieses unteren Bandabschnitts (**137**) eine Grenzfläche zwischen dem unteren Band und dem Befestigungselement (**118**;**138**) definiert;
(c) der erste Klemmring (**110**) eine obere Oberfläche und eine untere Oberfläche beinhaltet, die durch eine Umfangskante verbunden sind, wodurch ein Außendurchmesser des ersten Rings und ein Innendurchmesser des ersten Rings definiert werden und wobei eine erste Klemmzone entlang von mindestens einem Teil der unteren Oberfläche zwischen diesem Außendurchmesser des ersten Rings und diesem Innendurchmesser des ersten Rings definiert wird, wobei dieser erste Klemmbereich so ausgerichtet ist, dass er einem zu tragenden Gegenstand zugeordnet ist; und
(d) wobei der Außenbanddurchmesser kleiner als der erste Innendurchmesser des ersten Rings ist und wobei der Innenbanddurchmesser größer als der Durchmesser des Scheibenlochs ist; ein zweites Klemmelement (**139**), das einen zweiten Klemmring enthält, der ein ringförmiges Bauteil enthält, das einen zweiten Ringhohlraum definiert, wodurch der Innendurchmesser des zweiten Rings und der Außendurchmesser des zweiten Rings und ferner eine obere Oberfläche und eine untere Oberfläche definiert werden, die durch eine Umfangskante verbunden sind, wobei eine zweite Klemmzone entlang der oberen Oberfläche zwischen dem Innendurchmesser des zweiten Rings und dem Außendurchmesser des zweiten Rings definiert ist und wobei die Länge des Innendurchmessers des zweiten Rings länger als der Außenbanddurchmesser ist, sodass der untere Bandabschnitt (**137**) durch den zweiten Ringhohlraum gleiten kann; ein Befestigungselement (**142**), das eine Grenzfläche zwischen Befestigungselement und unterem Band definiert, die auf das einstellbare Zuordnen mit der Grenzfläche zwischen dem unterem Band und dem Befestigungselement (**138**) ausgerichtet ist; wobei diese Kuppel ferner mindestens eines der Folgenden definiert: (a) eine Aufhängungsgrenzfläche (**144**), die im axialen Mittelpunkt (**131**) definiert ist, (b) eine Grenzfläche zwischen Kuppel und Drehlager (**49**), die am freien Ende des abhängigen Wellenabschnitts definiert ist (**132**) und (c) eine Polgrenzfläche, die am freien Ende der abhängigen Welle definiert ist; und wobei mindestens ein Teil einer Oberfläche des Wellenabschnitts (**132**) eine Grenzfläche zwischen Scheibe und Welle (**133i**) definiert, die in geeigneter Weise darauf ausgerichtet ist, mechanisch mit der Grenzfläche zwischen Scheibe und Welle (**135**) verbunden zu sein.

2. Die Vorrichtung zum Tragen eines Gegenstands wie in Angabe 1 aufgeführt, wobei der Wellenabschnitt (**132**) zumindest teilweise hohl ist und einen Innenwellendurchmesser (**132d**) und eine Innenwellenoberfläche definiert, wobei: (a) mindestens ein Teil der Innenwellenoberfläche die Grenzfläche zwischen Welle und Scheibe (**133i**) definiert und wobei diese Grenzfläche zwischen Welle und Scheibe (**135**) eine zylindrische Verlängerung beinhaltet, die sich von diesem Scheibenabschnitt (**106**) weg erstreckt und wobei der äußere Durchmesser dieser zylindrischen Verlängerung kürzer als der Innenwellendurchmesser ist, und wobei diese zylindrische Verlängerung in den Wellenabschnitt eingeführt ist und wobei mindestens ein Teil der Außenfläche dieser zylindrischen Verlängerung so ausgelegt ist, dass sie mechanisch mit der Grenzfläche zwischen Welle und Scheibe (**133i**) verbunden ist; und (b) wobei diese Schnittstelle zwischen Scheibe und Welle (**135**) eine zylindrische Verlängerung beinhaltet, die sich von dem Scheibenabschnitt (**106**) weg erstreckt, und wobei diese zylindrische Verlängerung zumindest teilweise hohl ist, wodurch eine innere Verlängerungsfläche und ein innerer Verlängerungsdurchmesser und ein äußerer Verlängerungsdurchmesser definiert werden und wobei der innere Verlängerungsdurchmesser länger ist als der Außendurchmesser des Wellenabschnitts (**132**) und wobei mindestens ein Teil der äußeren Wellenoberfläche die Grenzfläche von Welle und Scheibe (**133i**) definiert und wobei dieser Wellenabschnitt (**132**) in die zylindrische Verlängerung eingeführt ist, sodass die Grenzfläche zwischen Welle und Scheibe (**133i**) mechanisch mit der Grenzfläche zwischen Welle und Scheibe (**135**) verbunden ist.

3. Die Vorrichtung zum Tragen eines Gegenstands wie in Angabe 1 aufgeführt, wobei der Wellenabschnitt (**132**) vollständig hohl ist und einen Innenwellendurchmesser (**132d**) definiert, und wobei der Kuppelabschnitt (**130**) ein Kuppelloch in der axialen Mitte definiert, wobei der Durchmesser des Kuppellochs kürzer als der Innenwellendurchmesser ist, und wobei das erste Klemmelement (**136**) ein Scheibenloch durch seine Mitte definiert, wodurch eine Aufhängungsgrenzfläche in der axialen Mitte der Kuppel definiert wird.

4. Die Vorrichtung zum Tragen eines Gegenstands wie in Angabe 1 aufgeführt, wobei sich der Wellenabschnitt (**132**) durch das erste Klemmelement (**136**) erstreckt und wobei das freie Ende dieses Wellenabschnitts (**132**) die Grenzfläche von Kuppel und Drehlager definiert (**49**) und wobei dieser Scheibenabschnitt (**106**) dort mindestens ein Entlüftungsloch (**51**) definiert, was eine Entlüftungsfunktion ermöglicht, und wobei die erste Klemmzone und die zweite Klemmzone mehrere Greifelemente definieren.

5. Die Vorrichtung zum Tragen eines Gegenstands wie in Angabe 4 ausgeführt, wobei der Kuppeldurchmesser ca. 11,7 cm (4,6 Zoll) beträgt, die abhängige Wellenlänge (**146**) ca. 5 cm (2,0 Zoll), die Höhe der Grenzfläche zur ersten Abdeckung (**148**) ca. 4,4 cm (1,75 Zoll), die Höhe der Grenzfläche zur zweiten Abdeckung (**150**) ca. 0,73 cm (0,289 Zoll) und die Höhe einer Mutter (**152**) ca. 1 cm (0,4 Zoll).

## Revendications

1. Un dispositif pour supporter un article, ledit dispositif (**40c**) comprenant : un dôme définissant un centre axial et comprenant une partie de dôme (**130**) et dans lequel le périmètre extérieur de ladite partie de dôme (130) définit un dôme-périmètre extérieur qui comprend (**a**) un périmètre généralement circulaire et (b) un périmètre polygonal ; une partie d'arbre (132) s'étendant depuis ledit centre axial dans lequel ladite partie d'arbre (**132**) comprend une pleine et une au moins partiellement creuse et dans laquelle ladite partie d'arbre (132) est (a) solidaire de ladite partie de dôme (130) et (b) associée mécaniquement à ladite partie de dôme (130) ; un premier élément de serrage (102; 136) comprenant une partie de disque **(106**) définissant un trou de disque (114), une partie de bande inférieure (**108**;**137**)et une première bague de serrage (**110**) s'étendant radialement et extérieurement à partir de celui-ci, dans lequel :
(a) ladite partie de disque (**106**) définit une interface disque-arbre (**135**) au centre approximatif de celle-ci, ladite interface disque-arbre (**135**) étant définie par (i) au moins une partie de la surface de ladite partie de disque (**106**) définissant le périmètre extérieur du trou de disque (**114**) défini par ladite partie de disque (**106**) au centre de ladite partie de disque (106), (ii) au moins une partie du surface externe d'un arbre de disque plein s'étendant à distance du centre de ladite partie de disque (106), (iii) au moins une partie de la surface externe d'un arbre de disque au moins partiellement creux s'étendant à l'écart du centre dudit disque, partie (**106**), et (iv) au moins une partie de la surface intérieure d'un arbre de disque au moins partiellement creux s'étendant à distance du centre de ladite partie de disque (**106**) ;
(b) ladite partie de bande inférieure (**108**;**137**) s'étend vers le bas depuis ladite partie de disque (**106**) et dans lequel ladite partie de bande inférieure (**137**) définit un diamètre de bande externe et un diamètre de bande interne et dans lequel au moins une partie d'une surface de ladite partie de bande inférieure (**137**) définit une interface de bande inférieure à attache (**118**; 138) ;
(c) ladite première bague de serrage (**110**) comprend une surface supérieure et une surface inférieure reliées par un bord périphérique définissant ainsi un diamètre extérieur de premier anneau et un diamètre intérieur de première bague et dans lequel une première zone de serrage est défini le long d'au moins une partie de ladite surface inférieure entre ledit diamètre extérieur du premier anneau et ledit diamètre intérieur du premier anneau où ladite première région de serrage est configurée pour être associée à un article à supporter ; et (d) dans lequel le diamètre de la bande externe est inférieur au diamètre interne de la première bague et dans lequel le diamètre de la bande interne est supérieur au diamètre dudit trou de disque ; un deuxième élément de serrage (**139**) comprenant un deuxième anneau de serrage comprenant un composant en forme d'anneau définissant un deuxième anneau-vide définissant ainsi un deuxième diamètre intérieur-anneau et un deuxième anneau-diamètre extérieur et définissant en outre une tige surface et une surface inférieure reliées par un bord périphérique dans lequel une seconde zone de serrage est définie le long de ladite surface supérieure entre ledit diamètre intérieur du second anneau et ledit diamètre extérieur du second anneau et dans lequel la longueur dudit second anneau- le diamètre intérieur est plus long que ledit diamètre de bande extérieure de sorte que ladite partie de bande inférieure(**137**) peut coulisser à travers ledit second vide annulaire ; un élément de fixation (**142**) définissant une interface élément de fixation à bande inférieure configurée pour s'associer de manière réglable à ladite interface bande inférieure à élément de fixation (**138**); dans lequel ledit dôme définit en outre au moins l'une parmi(a) une interface de suspension (144) définie audit centre axial (131), (b) une interface dôme-pivot (**49**) définie à l'extrémité libre de ladite partie d'arbre dépendante(132), et (c) une interface polaire définie à l'extrémité libre dudit arbre dépendant ; et dans lequel au moins une partie d'une surface de ladite partie d'arbre(132) définit une interface arbre-disque (**133i**) convenablement configurée pour être mécaniquement associée à ladite interface disque-arbre (**135**).

2. Le dispositif pour supporter un article selon la revendication 1, dans lequel ladite partie d'arbre (**132**) est au moins partiellement creuse définissant un diamètre d'arbre intérieur (**132d**) et une surface d'arbre intérieure dans laquelle : (a) au moins une partie de ladite surface intérieure d'arbre définit ladite interface arbre-disque (**133i**) et dans lequel ladite interface disque-arbre (**135**) comprend une extension cylindrique s'étendant à l'écart de ladite partie disque (**106**) et dans laquelle la partie externe le diamètre de ladite extension cylindrique est plus court que ledit diamètre d'arbre interne et dans lequel ladite extension cylindrique est insérée dans ladite partie d'arbre et dans lequel au moins une partie de la surface externe de ladite extension cylindrique est configurée pour être mécaniquement associée audit arbre-à- interface de disque (133i); et (b) dans lequel ladite interface disque-arbre (135)comprend une extension cylindrique s'étendant à l'écart de ladite partie de disque (**106**) et dans laquelle ladite extension cylindrique est au moins partiellement creuse définissant ainsi une surface d'extension interne et une surface interne du diamètre d'extension et un diamètre d'extension externe et dans lequel le diamètre d'extension interne est plus long que le diamètre externe de ladite partie d'arbre (**132**) et dans lequel au moins une partie de la surface d'arbre externe définit leditarbre à disque-interface (**133i**) et dans lequel ladite partie d'arbre (132) est insérée dans ladite extension cylindrique de sorte que l'interface arbre-disque (**133i**) est mécaniquement associée à ladite interface disque-arbre (**135**).

3. Le dispositif de support d'un article selon la revendication 1, dans lequel ladite partie d'arbre (**132**) est complètement creuse définissant un diamètre d'arbre interne (**132d**) et dans lequel ladite partie de dôme (**130**) définit un trou de dôme audit centre axial dans lequel le diamètre dudit trou de dôme est plus court que ledit diamètre d'arbre interne et dans lequel ledit premier élément de serrage (**136**) définit un trou de disque à travers son centre définissant ainsi une interface de suspension au centre axial dudit dôme.

4. Le dispositif pour supporter un article selon la revendication 1, dans lequel ladite partie d'arbre (**132**) s'étend à travers ledit premier élément de serrage (**136**) et dans lequel l'extrémité libre de ladite partie d'arbre (**132**) définit ledit dôme à interface pivotante (**49**) et dans laquelle ladite partie de disque (**106**) définit au moins un trou d'évent (**51**) à travers celle-ci, fournissant ainsi une fonction d'aération et dans lequel ladite première zone de serrage et ladite seconde zone de serrage définissent une pluralité d'éléments de prise.

5. Le dispositif pour supporter un article selon la revendication 4, dans lequel le diamètre du dôme est d'environ 11,7 cm (4,6 pouces), la longueur d'arbre dépendante (**146**) est d'environ 5 cm (2,0 pouces), la hauteur de l'interface du premier couvercle (**148**) est d'environ 4,4 cm (1,75 pouces), la hauteur de l'interface du deuxième couvercle (**150**) est d'environ 0,73 cm (0,289) pouces et la hauteur d'un écrou (**152**) est d'environ 1 cm (0,4 pouces).
